# EUROPÄISCHE PATENTANMELDUNG

(11) **EP 2 722 789 A2**
(43) Veröffentlichungstag der Anmeldung: **23.04.2014**
(21) Anmeldenummer: 13004942.2
(22) Anmeldetag: 15.10.2013
(51) Int. Cl.: G06K 7/08, G06K 19/067

(54) **Verfahren zum Nachweis der Echtheit eines tragbaren Datenträgers**

(30) Priorität: 17.10.2012 DE 102012020365
(71) Anmelder: Giesecke & Devrient GmbH, 81677 München (DE)
(72) Erfinder: Baldischweiler, Michael, 81825 München (DE)

(57) **Zusammenfassung**

Vorgeschlagen wird ein Verfahren zum Nachweis der Echtheit eines monolithischen Gegenstandes (49) durch Wechselwirkung es Datenträgers mit einem berührungsempfindlichen kapazitiven Display (22), das Teil einer Verifikationseinrichtung (20) ist. Der monolithische Gegenstand (49) besitzt einem Gegenstandskörper (1) mit einer potentiell elektrisch leitfähigen Struktur (3,4), die in unvorhersehbarer Weise Leitungsverbindungen (10) zwischen verschiedenen Punkten (11,12,13,14) auf den Ober- und Seitenflächen (8,9,18,19) bildet. Der monolithische Gegenstand (49) wird in Wechselwirkung mit dem Display (22) gebracht, z.B. durch Aufsetzen mit einer Seite (8, 9). Der Nutzer (50) schließt dabei einen Stromkreis zwischen dem monolithischen Gegenstand (49) und dem berührungsempfindlichen kapazitiven Display (22), so dass zwischen dem monolithischen Gegenstand (49) und dem Display (22) ein Ladungsfluß erfolgt. Die dadurch bewirkten Kapazitätsänderungen werden von der Verifikationseinrichtung (20) als Meßwerte erfasst. Die Erfassung erfolgt über eine Zeit Delta. Die erfassten Meßwerte werden durch die Verifikationseinrichtung (20) ausgewertet, um auf die Echtheit des monolithischen Gegenstandes (49) zu schließen.

## Beschreibung

Die Erfindung betrifft ein Verfahren zum Nachweis der Echtheit eines tragbaren Datenträgers mit Hilfe eines kapazitiven berührungsempfindlichen Displays. Insbesondere betrifft die Erfindung ein Verfahren zur Prüfung der Echtheit von Chipkarten oder Ausweiskarten im Kreditkartenformat.

Aus der EP 2 458 526 A1 ist ein Verfahren zur Übermittlung von Informationen von einem tragbaren Datenträger an ein Gerät mit einem berührungsempfindlichen Display bekannt, in dem das Display Kapazitätsänderungen erfasst, die von dem Datenträger bewirkt werden. Der Datenträger besteht dabei grundsätzlich aus nicht leitendem Material, weist aber an bestimmten Stellen leitfähige Bereiche auf. Die leitfähigen Bereiche können geometrische Strukturen bilden oder aus Abschnitten mit unterschiedlichsten Dielektrizitätskoeffizienten gebildet sein, die eine alphanumerische Information kodieren. Zur Übertragung der auf dem Datenträger hinterlegten Information wird dieser in Interaktion mit dem berührungsempfindlichen Display gebracht. Dies geschieht, indem der Datenträger auf das berührungsempfindliche Display gelegt und/oder relativ zu dem berührungsempfindlichen Display bewegt wird. Ein Nutzer berührt dabei den Datenträger an geeigneten Punkten, so dass an den elektrisch leitenden Strukturen eine Kapazitätsänderung eintritt. Die Kapazitätsänderung wird von dem berührungsempfindlichen Display erfasst. Aus dem erfassten Signal wird die übertragene Information abgeleitet. Die bekannte Lösung eröffnet einen zusätzlichen Weg zur Hinterlegung von Information auf einem tragbaren Datenträger und zur Übertragung dieser Information an ein berührungsempfindliches Display.

Berührungsempfindliche Displays sind in einer zunehmenden Anzahl von Endgeräten enthalten. Insbesondere bilden sie ein wesentliches Element in Tablett-PCs und Smart Phones. Die Funktion berührungsempfindlicher kapazitiver Displays beruht grundsätzlich drauf, dass ein elektrisches Feld mithilfe eines ladungsführenden Mediums verändert wird. Bevorzugt beruht sie auf der Auswertung von Potentialdifferenzen zwischen einem auf das Display aufgesetzten Medium und Sensorflächen des Displays. Die Oberfläche des Displays wird üblicherweise von einem Glasträger oder einem vergleichbaren transparenten Material gebildet. An der Rückseite der Oberfläche ist eine Vielzahl von Sensorflächen ausgebildet. Gegenüber den Sensorflächen wirkt die Oberfläche des Displays als dadurch Kapazität. Bei Berührung mit einem Finger oder einem geeigneten Hilfsmittel ändert die Kapazität lokal ihren Wert. Diese Änderungen werden von einer mit der Sensorik gekoppelten Logik ermittelt und in Displaykoordinaten umgerechnet. In der Veröffentlichung "Protected Capacitive Touch Screens"von Gary Barret, Ryomei Obote in dem Magazin "Information Display" 3/10, ist die Funktionsweise von berührungsempfindlichen kapazitiven Displays - häufig auch Touch Panel oder Touch Screen Display genannt - sowie deren Aufbau beschrieben.

Aufgabe der Erfindung ist es, ein Verfahren zur Prüfung der Echtheit eines monolithischen Gegenstandes mit Hilfe eines berührungsempfindlichen Displays anzugeben, das einfach durchführbar ist. Der monolithische Gegenstand soll insbesondere ein tragbarer Datenträger sein können.

Diese Aufgabe wird gelöst durch ein Verfahren mit den Merkmalen des Hauptanspruchs. Sie wird ferner gelöst durch einen Gegenstand gemäß dem unabhängigen Anspruch 9.

Das erfindungsgemäße Verfahren hat den Vorteil, dass es nahezu ohne Zusatzaufwand mit vorhandenen Einrichtungen umsetzbar ist. Erforderlich ist lediglich eine Verifikationseinrichtung mit einem berührungsempfindlichen kapazitiven Display, das durch Installieren einer Softwareapplikation entsprechend eingerichtet wird.

Das erfindungsgemäße Verfahren eignet sich insbesondere für tragbare Datenträger. Eine Echtheitserkennung kann in vorteilhafter Weise nachträglich für bereits in Verwendung befindliche Datenträger eingerichtet werden. Bei noch herzustellenden und erst zukünftig in Betrieb zu nehmenden Datenträgern kann durch einfache Maßnahmen eine besonders gute Echtheitserkennung realisiert werden. In einer besonders zweckmäßigen Ausführung kann beispielsweise eine Schicht in dem Datenträger ausgebildet werden, die speziell dafür vorbereitet ist, im Zuge der Herstellung in zufälliger Weise elektrisch leitende Verbindungen zu erzeugen.

Das erfindungsgemäße Verfahren zeichnet sich weiterhin durch eine besonders gute Handhabbarkeit aus. Ein monolithischer Gegenstand bzw. ein Datenträger, dessen Echtheit geprüft werden soll, kann in sehr freier Weise an ein berührungsempfindliches Display gebracht werden. In besonders vorteilhafter Weise kann ein Datenträger mit nur einer Seitenkante aufgesetzt werden. Das für eine Echtheitsprüfung aufgenommene Meßsignal lässt sich desweiteren gut in zweidimensionaler Form in einem Graphen darstellen, wodurch es durch einen Nutzer unmittelbar einer sehr schnellen Erstbewertung unterzogen werden kann.

Unter Bezugnahme auf die Zeichnung wird nachfolgend ein Ausführungsbeispiel der Erfindung näher erläutert.

Es zeigen:
- Fig. 1: schematisch die Hauptelemente einer Verifikationseinrichtung sowie in Aufsicht einen tragbaren Datenträger mit zufälligen elektrisch leitenden Verbindungen zwischen verschiedenen Punkten auf den Seitenflächen,
- Fig. 2: in teilweise perspektivischer Darstellung eine Echtheitsprüfung eines tragbaren Datenträgers durch Aufsetzen mit einer Kante,
- Fig. 3: eine Echtheitserkennung eines tragbaren Datenträgers bei aufgelegtem Datenträger,
- Fig. 4: eine Echtheitserkennung eines an einer Kante aufgesetzten tragbaren Datenträgers mit dynamischer Nutzerunterstützung.

Die Erfindung wird nachfolgend stellvertretend am Beispiel einer Karte im Format einer Chipkarte beschrieben, wie sie z.B. aus dem "Handbuch der Chipkarten", W. Rankl, W. Effing, Carl Hanser Verlag München, 5. Auflage, bekannt ist. Die Erfindung eignet sich aber auch für eine Vielzahl von tragbaren Datenträgern in anderen Formfaktoren, die auf einem isolierenden Grundmaterial basieren, in dem zwischen verschiedenen Oberflächenpunkten elektrisch leitende Verbindungen ausgebildet werden können. Unter anderem eignet sich die Erfindung für mehrschichtige, kleinformatige, flächige Datenträger in einer Vielzahl von Geometrien und Schichtenaufbauten: beispielsweise für SIM-Karten, für Speicherkarten, für kartenartige Anhänger oder für auf Karten basierende Sticker. In Betracht kommen auch kleinformatige Geräte, die kartenartige Gehäuseschalen besitzen, z.B. USB-Speichersticks.

Die Erfindung eignet sich darüberhinaus allgemein für monolithische Gegenstände, d.h. für Gegenstände, die einen zusammenhängend hergestellten, einstückigen Gegenstandskörper aufweisen. Die Erfindung eignet sich dabei auch für größere Gegenstände. Beispielsweise eignet sich die Erfindung für monolithische Bauteile von Fahrzeugen aller Art, etwa für Rahmenteile von Fahrrädern oder Autos oder für Rumpfteile von Booten oder Flugzeugen.

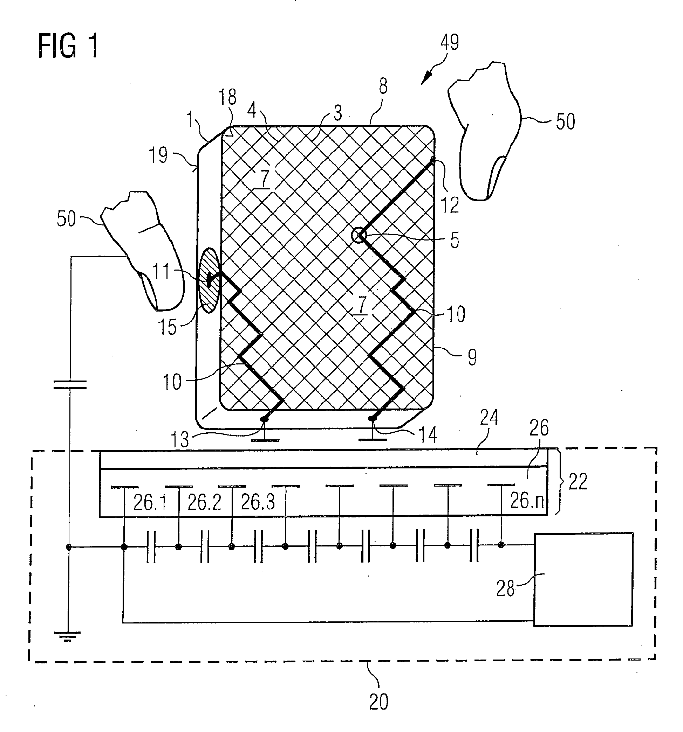

Fig. 1 veranschaulicht die grundsätzliche Funktionsweise der erfindungsgemäßen Lösung. Dargestellt ist dazu stark schematisiert und teilperspektivisch eine Aufsicht auf einen monolithischen Gegenstand 49 in der Form eines tragbaren Datenträgers zusammen mit den Hauptelementen einer Verifikationseinrichtung 20. Angedeutet sind auch die wesentlichen elektronischen Elemente der Lösung.

Für den tragbaren Datenträger 49 wird im folgenden eine Karte im Chipkartenformat angesetzt. Der tragbare Datenträger 49 umfasst einen Gegenstandskörper 1, im folgenden Kartenkörper genannt, aus einem nichtleitenden Material, in der Regel Kunststoff. Der Kartenkörper 1 ist flach und rechtförmig ausgeführt, mit zwei kurzen Randseiten 8 und zwei langen Randseiten 9, nachfolgend bezeichnet als Stirnseiten 8 bzw. Längsseiten 9, sowie zwei Deckseiten 18, 19. Der Kartenkörper 1 ist vorzugsweise vollständig als einstückiger, monolithischer Gegenstand hergestellt. In den Kartenkörper 1 können Bauelemente integriert sein, z.B. elektronische Schaltkreise oder Sicherheitselemente. In Varianten können einzelne Schichten oder Teilbereiche des Kartenkörpers 1 in nicht-monolithischer Form ausgeführt sein.

In dem Kartenkörper 1 ist eine Struktur 2 aus einem potentiell leitfähigem Material ausgebildet. Unter einem potentiell leitfähigen Material wird dabei ein Material verstanden, das begrenzte leitfähige Strukturen, Bereiche, Elemente, Bestandteile oder Fasern aufweist, die leitende Abschnitte bilden, die alleine aber in der Regel noch keine durchgehende leitfähige Verbindung zwischen Randpunkten der Struktur 2 bilden.

Die Struktur 2 besteht, wie in Fig. 1 angedeutet, beispielsweise aus gerichteten Fasern 3, 4, die kreuzend übereinander angeordnet sind. Die Fasern 3, 4 kreuzen sich dabei an Kreuzungspunkten 5. Die Fasern 3, 4 bilden leitende Abschnitte, deren Länge variiert. Die Länge der leitenden Abschnitte hängt vom Aufbau des Fasermaterials und von der Verarbeitung des leitfähigen Materials und der Herstellung des Kartenkörpers 1 ab. Herstellungsbedingt ergeben sich zum einen Kreuzungspunkte 5, an denen sich kreuzende Fasern 3, 4 zu dann zusammenhängenden Leitungsabschnitten verbinden. Zum anderen entstehen herstellungsbedingt Lücken 7, in denen die Fasern 3, 4 unterbrochen sind und/oder die Leitfähigkeit nicht gegeben ist. Die Verteilung der Kreuzungspunkte 5 und damit die Ausbildung von leitenden Abschnitten erfolgt in unvorhersehbarer Weise.

Durch Verbinden von Leitungsabschnitten bei der Herstellung entstehen in dem Kartenkörper 1 zufällige, durchgehende elektrisch leitende Verbindungen 10, die verschiedene Endpunkte 11, 12, 13, 14 an den Randseiten des Datenträgerkörpers 1 miteinander verbinden. Der Kartenkörper 1 ist zweckmäßig so ausgeführt, dass Endpunkte der elektrisch leitenden Verbindungen 10, wie in Fig. 1 angedeutet, jeweils an den Längsseiten 9 einerseits und an den Stirnseiten 8 andererseits liegen; die an Längsseiten liegenden Endpunkte 11, 12 werden nachfolgend zur leichteren Unterscheidung auch Anfangspunkte genannt. Möglich ist es ebenso, den Kartenkörper 1 so auszuführen, dass Endpunkte an den Oberflächen des Kartenkörpers 1 liegen.

Der Verlauf der leitenden Verbindungen 10 in dem Kartenkörper 1 ist grundsätzlich zufällig. Er schwankt in der Regel von Karte 49 zu Karte 49. Dasselbe gilt für die Anzahl der elektrisch leitenden Verbindungen 10. Diese ist so groß, dass die Topographie der elektrisch leitenden Verbindungen 10 im günstigen Fall jede Karte 49 eindeutig identifiziert. Zumindest erlaubt die Topographie eine Unterscheidung nach verschiednen Typen von Karten 49.

Insbesondere bildet die Lage der Endpunkte 11, 12, 13, 14 ein charakteristisches Muster. Das Muster ist häufig redundant, d.h. es kann eine Karte 49 häufig bereits dann identifizieren, wenn es nur teilweise reproduziert wird. Dieses charakteristische Muster wird zweckmäßig nach Fertigstellung der Karte 49 erfaßt und in Form eines Referenzdatensatzes auf der Karte 49 hinterlegt. Falls die Karte 1 einen IC aufweist, erfolgt die Hinterlegung zweckmäßig auf dem IC. Alternativ oder zusätzlich kann die Hinterlegung des Referenzdatensatzes auch z.B. in optischer Form, etwa als Barcode, auf einer Oberfläche der Karte 49 erfolgen. Weiter kann der Referenzdatensatz auch in einer Datenbank vorgehalten werden, um von dort bei Bedarf jederzeit abgerufen zu werden.

In einer vorteilhaften Ausgestaltung besitzt der Referenzdatensatz zudem eine zeitliche Komponente. Die Erfindung macht sich dabei die Feststellung zunutze, dass ein Teil der in dem Kartenkörper 1 vorhandenen elektrisch leitenden Verbindungen 10 in einer Prüfsituation erst nach Ablauf bestimmter Zeiträume erfassbar ist; ebenso ist ein Teil der zunächst erfassbaren elektrisch leitenden Verbindungen 10 nach Ablauf bestimmter Zeiträume nicht mehr erfassbar. Der überraschende Effekt beruht vermutlich auf in dem Kartenkörper ablaufenden Lade- und Entladevorgängen, die mit Zeitkonstanten behaftet sind. Das charakteristische Muster ist damit auch eine Funktion der Zeit. Der Referenzdatensatz kann deshalb z.B. Wertepaare beeinhalten, die das Erscheinen bzw. das Verschwinden bestimmter Endpunkte zu bestimmten Zeitpunkten angeben.

Eine Struktur 2 der in Fig. 1 angedeuteten Art ergibt sich z.B. bei Verwendung von Kohlefasermaterial in dem Kartenkörper 1. Eine andere Möglichkeit, die Struktur 2 herzustellen, besteht darin, in einen Kartenkörper 1 Partikel einzubringen, die im Zuge der Herstellung in unvorhersehbarer Weise elektrisch leitfähig werden und dabei elektrisch leitende Verbindungen 10 ausbilden. Möglich ist es auch, in einen Kartenkörper 1 eine oder mehrere Schichten einzubringen, in denen zufällige elektrisch leitende Verbindungen bereits vorab angelegt wurden.

Die Verifikationseinrichtung 20 kann z.B. Teil eines Handys oder eines Tablett-Computers oder eines anderen vergleichbaren Gerätes sein. Sie beruht auf einem berührungsempfindlichen kapazitiven Display 22, das eine Displayscheibe 24 umfasst, an deren Unterseite eine Sensoranordnung 26 angeordnet ist. Die Sensoranordnung 26 ist mit einer Auswerteeinheit 28 verbunden. Die Auswerteeinheit 28 ist durch Software so konfigurierbar, dass sie unterschiedliche Auswertungen durchführen kann. Sollen größere monolithische Gegenstände verifiziert werden, ist die Verifikationseinrichtung 20 entsprechend der Größe der Gegenstände dimensioniert. Das Display 22 kann dann ohne weiteres eine Diagonale im Meterbereich aufweisen und als stationäre Einrichtung ausgebildet sein.

Die Sensoranordnung 26 erfaßt Kapazitätsänderungen, die durch Wechselwirkung mit einer Karte 49 entstehen. Eine solche Wechselwirkung entsteht, wenn eine Karte 49 in den Wechselwirkungsbereich des berührungsempfindlichen kapazitiven Display 22 gebracht wird. Diese geschieht z.B. beim Aufsetzen einer Karte 49 auf die Displayscheibe 24 durch einen Nutzer 50. Der Nutzer 50 ist in Fig. 1 durch Finger angedeutet. Die Wechselwirkung entsteht zwischen der Sensoranordnung 26 und Endpunkten von Leitungsverbindungen 10 in dem Kartenkörper 1.

Bewirkt werden die Kapazitätsänderungen durch den Einfluß des Nutzers 50, indem er die Karte 49 berührt. In der Regel berührt der Nutzer 50 zugleich die Karte 49 und die Verifikationseinrichtung 20. Durch die gleichzeitige Berührung wird an der Berührungsfläche zwischen Nutzer und Karte 49 prinzipiell ein Stromkreis aufgebaut, in dem ein Ladungsfluß möglich ist. Indem der Nutzer 50 die Karte 49 berührt, wird somit zwischen Karte 49 und Nutzer 50 ein Ladungsfluß möglich. Dies bewirkt, dass die Endpunkte 11, 12, 13, 14 der elektrisch leitenden Verbindungen 10 auf dasselbe Potential gebracht werden. Eine von einem Nutzer 50 an den Anfangspunkten 11, 12 bewirkte Kapazitätsänderung ist damit an den Endpunkten 13,14, durch die Sensoranordnung 26 erfaßbar. In Fig. 1 ist auch ein vereinfachtes kapazitives Ersatzschaltbild des mithilfe des Nutzers 50 geschlossenen Stromkreises angedeutet.

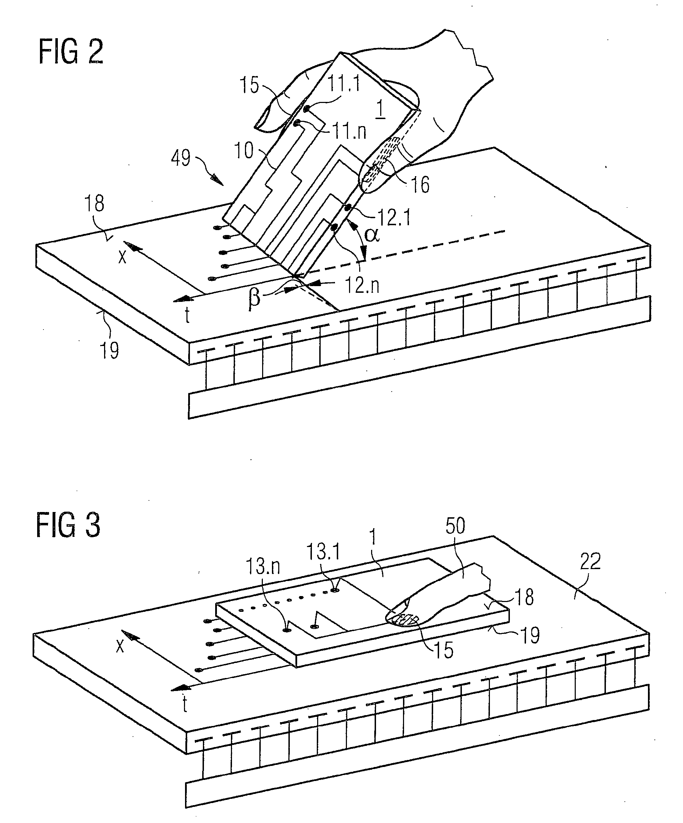

Fig. 2 veranschaulicht eine typische Prüfsituation bei der Prüfung der Echtheit einer Karte 49 durch einen Nutzer 50. Die Karte 49 wird von dem Nutzer 50 in einer definierter Weise auf die Displayscheibe 24 aufgesetzt. In der Prüfsituation in Fig. 2 erfolgt das Aufsetzen der Karte 49 so, dass die Kante einer Stirnseite 8 der Karte 49 auf der Oberfläche der Displayscheibe 24 aufliegt. Die Karte 49 wird dabei schräg, unter einem Neigungswinkel α, und verdreht, unter einem Drehwinkel β, auf die Oberfläche der Displayscheibe 24 aufgesetzt. Zwischen Karte 49 und Nutzer 50 entstehen zugleich an den Längsseiten 9 zwei Berührungsflächen. Durch die Nutzer-Berührung erfolgt ein Ladungsfluß zwischen den in den Berührungsflächen 15,16 liegenden Anfangspunkten 11.1, ..., 11.n, 12.1,..., 12.n leitender Verbindungen 10 und zugehörigen, den an den Stirnseiten 8 liegenden Endpunkten 13.1, ...,13.m, 14.1, ... 14.m.

In Varianten kann das Aufsetzen der Karte 49 auch mit einer Längsseite 9 erfolgen und/ oder es kann vorgesehen sein, dass die Karte 49 vollflächig an einer Stirn- oder Längsseite aufgesetzt werden muss. Auf der Displayscheibe 24 kann zudem eine graphische und/ oder textuelle Benutzerführung angezeigt werden, die angibt, wie das Aufsetzen geschehen soll.

Die Sensoranordnung 26 erlaubt mit hoher Ortsauflösung die Messung von Kapazitätsverteilungen. Sie ist hierzu z.B. als Matrix mit einer Vielzahl von in Reihen und Zeilen angeordneten Einzelsensorelementen 26.1, ..., 26.n betreibbar, wie dies in Fig. 2 angedeutet ist. Weitergehende Hinweise zu Aufbau und Funktion der Sensoranordnung 26 finden sich z.B. in der eingangs erwähnten Veröffentlichung "Protected Capacitive Touch Screens" von W. Barret, R. Obote.

In der in Fig. 2 dargestellten Prüfsituation erfasst die Sensoranordnung 26 Kapazitätsänderungen, die sich zwischen den in der Stirnseite 8 liegenden Endpunkten 13.1, ...,13.m, 14.1, ... 14.m leitender Verbindungen 10 und der Sensoranordnung 26 ergeben. Erfasst werden Kapazitätsveränderungen derjenigen elektrisch leitenden Verbindungen 10, deren jeweils andere Anfangspunkte 11.1,..., 11.n, 12.1,..., 12.n von dem Nutzer 50 berührt werden. Die erfassten Kapazitätsveränderungen liefern Meßwerte, die Positionen von Endpunkten 13.1, ...,13.m, 14.1, ... 14.m elektrisch leitender Verbindungen 10 entsprechen.

Die Erfassung der Kapazitätsveränderungen erfolgt über einen bestimmten Zeitraum Delta. Erfasst werden dadurch auch solche Kapazitätsveränderungen, die erst nach Ablauf bestimmter Zeiträume erfassbar ist; ebenso wird erkannt, wenn Kapazitätsveränderungen zunächst erfassbar, nach Ablauf bestimmter Zeiträume aber nicht mehr erfassbar sind.

Der Zeitraum Delta kann softwaretechnisch festgelegt sein. Seine Länge richtet sich in diesem Fall vor allem nach der Leistungsfähigkeit der Auswerteeinheit 28. In ersten Praxistests wurden Zeiträume von 1 bis 5 Sekunden eingestellt. In einer alternativen Ausgestaltung ist die Dauer für den Zeitraum Delta grundsätzlich unbeschränkt. Die Meßwerterfassung erfolgt solange, wie die Karte 49 mit der Sensoranordnung 26 interagiert. Die Meßwerterfassung wird beendet, wenn der Nutzer 50 die relative Position der Karte 49 zu der Displayscheibe 24 verändert oder er die Karte 49 von der Displayoberfläche 24 entfernt. Zusätzlich kann eine maximale Dauer für den Zeitraum Delta vorgegeben sein. Die Dauer des Zeitraumes Delta kann ferner auch von der Art einer Karte 49 abhängig gemacht sein oder davon abhängen, dass eine bestimmte Karte erkannt wird.

Aus den in dem Zeitraum Delta erfassten Meßwerten erzeugt die Auswerteeinheit 28 Wertepaare, die jeweils aus einer Position eines Endpunktes 13.1, ..., 13.m, 14.1,... 14.m einer leitenden Verbindung 10 und einem Zeitpunkt bestehen. Die Wertepaare liefern ein charakteristisches Muster, das aus einer Verteilung von an bestimmten Positionen der Displayscheibe 24 gewonnenen Meßwerten zu bestimmten Zeitpunkten besteht.

Die Verteilung wird zweckmäßig auf dem Display 22 in Form eines Graphen als Ort-Zeit-Darstellung angezeigt. Die Anzeige basiert zweckmäßig, wie in Fig. 2 angedeutet, auf einer Ordinate x zur Darstellung der Positionen und einer Abszisse t zur Zuordnung eines Meßzeitpunktes. Die Ordinate x kann an den Hauptachsen des Displays 22 ausgerichtet sein. Denkbar ist aber auch, die Ordinate x unter demselben Drehwinkel β zu neigen, um den die Karte 49 ggf. verdreht auf die Displayscheibe 24 aufgesetzt ist. Die Anzeige der jeweils durch eine Position und einen zugehörigen Zeitpunkt gebildeten Wertepaare erfolgt zweckmäßig in Gestalt eines geometrischen Objektes, etwa eines Punktes, eines Quadrates oder eines Striches. Es entsteht auf diese, wie in Fig. 2 angedeutet, eine visuell wahrnehmbare Verteilung von Meßwerten, die einem Nutzer 50 unmittelbar einer erste qualitative Beurteilung ermöglichen.

Die aufgenommenen Meßwerte werden weiterhin durch die Auswerteeinheit 28 ausgewertet. Der Auswerteeinheit 28 wird hierzu eine geeignete Prüfsoftware zur Echtheitsprüfung bereitgestellt. Ist die Verifikationseinrichtung 20 an ein Datennetz angeschlossen, erfolgt die Bereitstellung der Prüfsoftware zweckmäßig hierüber. Ist die Verifikationseinrichtung 20 z.B. ein Handy, kann die Prüfsoftware als Anwendung ("App") bereitgestellt werden, die über die Luftschnittstelle an das Handy übertragen wird. Falls die Karte 49 über einen IC und eine Schnittstelle zu der Verifikationseinrichtung 20 verfügt, kann auch vorgesehen sein, dass die Prüfsoftware von der Karte 49 an die Verifikationseinrichtung 20 übergeben wird.

Mit Hilfe der Prüfsoftware wertet die Auswerteeinheit 28 die gewonnenen Meßwerte auf Vorliegen bestimmter Muster aus. Beispielsweise wird ermittelt, in welchen räumlichen Abständen zueinander die Endpunkte 13.1, ..., 13.m, 14.1, ... 14.m an der Stirnseite 8 der Karte 49 liegen. Oder es wird ermittelt, in welchen Zeitabständen Meßwerte erfasst wurden. Oder es wird gezählt, wie viele Meßwerte an einer bestimmten Position in einer bestimmten Zeit erfasst wurden. Oder die gefundenen Meßwerte werden mit einem Referenzdatensatz verglichen, der zu diesem Zweck bereitgestellt wird. Aus den gefundenen Ergebnissen erzeugt die Auswerteeinheit 28 eine Angabe, die eine Eigenschaft der geprüften Karte 49 beschreibt. Durch Vergleich der gefundenen Eigenschaft mit vorgegebenen Werten, etwa einem Referenzdatensatz, leitet die Prüfsoftware zweckmäßig ferner Aussage zur Echtheit der geprüften Karte 49 ab. Eine Echtheitsaussage kann z.B. in der Angabe einer Wahrscheinlichkeit bestehen, mit dem eine geprüfte Karte 49 echt ist.

Die abgeleitete Echtheitsaussage und/ oder die gefundene Eigenschaft gibt die Auswerteeinheit 28 über das Display 22 an den Nutzer 50 aus. Zusätzlich können andere Angaben zu der geprüften Karte 49 angezeigt werden, beispielsweise der Name eines Herausgebers.

Fig. 3 veranschaulicht eine andere typische Prüfsituation, in der eine Karte 49 flach auf ein Display 22 aufgelegt und von einem Nutzer 50 auf der abgewandten Seite berührt wird. Voraussetzung dafür, dass diese Prüfsituation ein auswertbares Messergebnis liefert, ist, dass zwischen den Kartendeckseiten 18, 19 elektrisch leitende Verbindungen 10 bestehen. In Fig. 3 ist dieser Fall angedeutet. Alle leitenden Verbindungen 10 gehen dabei von der relativ kleinen Berührungsfläche 15 aus und enden, verteilt über eine andere, in der Regel größere Fläche an verschiedenen Endpunkten 13.1,... 13.n auf der abgewandten Deckseite 19, die auf der Displayscheibe 24 aufliegt. Die Durchführung der Meßwertaufnahme und die Auswertung der Meßwerte erfolgen grundsätzlich auf dieselbe Weise wie anhand der Prüfsituation in Fig. 2 beschrieben. Insbesondere wird auch bei aufgelegter Karte 49 eine aus Koordinaten von Positionen in Abhängigkeit von der Zeit bestehende Meßwertverteilung erzeugt und angezeigt.

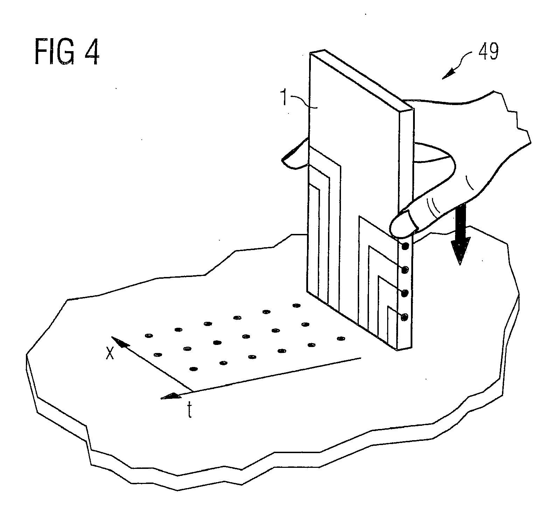

Fig. 4 veranschaulicht eine andere typische Prüfsituation, in der das zeitabhängige Auftreten von Messsignalen durch die Durchführung der Messsignalaufnahme unterstützt wird. Die Karte 49 wird in diesem Beispiel senkrecht auf die Displayscheibe 24 aufgesetzt, so dass eine Stirnseite 8 vollflächig aufliegt und die Karte 49 orthogonal zur Oberfläche der Displayscheibe fixiert ist. Das Aufsetzen kann durch geeignete Anzeigen auf der Displayscheibe 24 angeleitet werden. Bei der Durchführung der Meßwertaufnahme bewegt der Nutzer 50 nun, wie durch den Pfeil angedeutet, die Berührungsfläche in Richtung auf die Displayscheibe 24. Praktisch geschieht dies, indem der Nutzer die Karte 49 mit zwei Fingern fasst und die Finger in Richtung Displayscheibe 24 schiebt. Durch die Bewegung der Berührungsfläche werden in diesem Fall in einer zeitlichen Abfolge elektrisch leitende Verbindungen zwischen dem Nutzer 50 und der Sensoranordnung 26 hergestellt. Die Erfassung der Meßwerte und ihre Auswertung erfolgen zweckmäßig wiederum wie anhand der Prüfsituation in Fig. 2 beschrieben.

Unter Berücksichtigung des grundlegenden Gedankens, nämlich die Echtheit eines monolithischen Gegenstandes anhand von zufällig ausgebildeten elektrisch leitenden Verbindungen in einer zeitbezogenen Meßwerterfassung durchzuführen, gestattet die Erfindung eine Vielzahl von Ausgestaltungen und Weiterbildungen, die hier nicht im einzelnen ausgeführt sind. Dies betrifft etwa Aufbau und Gestaltung des zu verifizierenden monolithischen Gegenstandes. Hier können Anzahl, Verteilung und Lage, mithin die Topographie der elektrisch leitenden Verbindungen durch den Herstellungsprozess gezielt beeinflusst werden. Auch ist es möglich, bestimmte Bereiche der Seiten- oder Oberflächen eines monolithischen Gegenstandes für die Echtheitsprüfung vorzugeben und diese z.B. durch optische Markierungen anzuzeigen. Entsprechend ist es möglich, an der Verifikationseinrichtung 20 Maßnahmen zu treffen, die eine Echtheitsprüfung unterstützen. Beispielsweise können durch Anzeigen auf dem Display 22 Positionen festgelegt werden, in denen ein zu prüfender monolithischen Gegenstandes aufgesetzt werden muss, oder es können Angaben dargestellt werden, wie ein Datenträger 49 in Interaktion mit der Verifikationseinrichtung 20 zu bringen ist.

## Patentansprüche

1. Verfahren zum Nachweis der Echtheit eines monolithischen Gegenstandes durch Wechselwirkung mit einem berührungsempfindlichen kapazitiven Display mit folgenden Schritten:
- Bereitstellen einer Verifikationseinrichtung (20) mit einem berührungsempfindlichen kapazitiven Display (22),
- Bereitstellen eines monolithischen Gegenstandes (49) mit einem Gegenstandskörper (1), der in charakteristischer Weise Leitungsverbindungen (10) zwischen verschiedenen Punkten (11, 12, 13, 14) auf den Ober- und Seitenflächen (6, 8,18,19) des Gegenstandskörpers (1) aufweist,
- Herstellen einer Wechselwirkung zwischen dem monolithischen Gegenstand (49) und der Verifikationseinrichtung (20), indem zumindest eine Ober- oder Seitenfläche (6, 8,18,19) des monolithischen Gegenstandes (49) in den Wechselwirkungsbereich des berührungsempfindlichen kapazitiven Displays (22) gebracht wird,
- Aufbauen eines Stromkreises zwischen dem monolithischen Gegenstand (49) und dem berührungsempfindlichen kapazitiven Display (22), so dass zwischen dem monolithischen Gegenstand (49) und dem berührungsempfindlichen kapazitiven Display (22) ein Ladungsfluß erfolgen kann,
- Erfassen über eine Zeit Delta der durch den Ladungsfluß auf dem berührungsempfindlichen kapazitiven Display (22) bewirkten Kapazitätsänderungen als Meßwerte,
- Auswerten der über die Zeit Delta erfassten Meßwerte durch die Verifikationseinrichtung (20), um auf die Echtheit des monolithischen Gegenstandes (49) zu schließen.

2. Verfahren nach Anspruch 1, **dadurch gekennzeichnet, dass** die Leitungsverbindungen (10) in unvorhersehbarer Weise bei der Herstellung des Gegenstandskörper s(1) gebildet werden, indem leitende Abschnitte in einem potentiell elektrisch leitfähigen Material miteinander verbunden werden.

3. Verfahren nach Anspruch 1 oder 2, **dadurch gekennzeichnet, dass** das Herstellen einer Wechselwirkung zwischen dem monolithischen Gegenstand (49) und der Verifikationseinrichtung (20) erfolgt, indem der monolithischen Gegenstand (49) mit einer Ober- oder Seitenfläche (6, 8,18,19) auf das berührungsempfindliche kapazitiven Displays (22) aufgesetzt wird.

4. Verfahren nach einem der vorhergehenden Ansprüche, **dadurch gekennzeichnet, dass** der Aufbau des Stromkreises erfolgt, indem ein Nutzer (50) den monolithischen Gegenstand (49) berührt.

5. Verfahren nach einem der vorhergehenden Ansprüche, **dadurch gekennzeichnet, dass** der Nutzer (50) den monolithischen Gegenstand (49) an wenigstens einer Berührungsfläche (15,16) berührt und innerhalb der Berührungsfläche (15,16) wenigstens ein Endpunkte (11,12, 13, 14) einer elektrisch leitenden Verbindung (10) liegt.

6. Verfahren nach einem der vorhergehenden Ansprüche, **dadurch gekennzeichnet, dass** die Berührungsfläche (15,16) während einer Meßwerterfassung relativ zu dem monolithischen Gegenstand (49) verschoben wird.

7. Verfahren nach einem der vorhergehenden Ansprüche, **dadurch gekennzeichnet, dass** auf dem berührungsempfindlichen Display (22) in einem Graphen Wertepaare angezeigt werden, die jeweils aus einer örtlichen Position eines Meßwertes und einer Zeit bestehen.

8. Verfahren nach einem der vorhergehenden Ansprüche, **dadurch gekennzeichnet, dass** der monolithische Gegenstand (49) ein tragbarer Datenträger ist.

9. Monolithischer Gegenstand mit einem integrierten Echtheitsmerkmal, das mittels einer Verifikationseinrichtung (20) mit einem berührungsempfindlichen kapazitiven Display (22) prüfbar ist,
**dadurch gekennzeichnet, dass**
der Gegenstandskörper (1) eine elektrisch leitfähige Struktur (2) aufweist, in der in charakteristischer Weise Leitungsverbindungen (10) zwischen verschiedenen Punkten (11, 12, 13, 14) auf den Ober- oder Seitenflächen (8, 9,18,19) bestehen, so dass ein Ladungsfluß zwischen dem berührungsempfindlichen kapazitiven Display (22) und einem Punkt (11, 12) auf einer Ober- oder Seitenfläche zu einer Potentialänderung an einem anderen Punkt (13, 14) auf einer anderen Ober- oder Seitenfläche (8, 9, 18, 19) des Gegenstandskörpers (1) führt, die für das berührungsempfindliche kapazitive Display (22) erfassbar ist.

10. Monolithischer Gegenstand nach Anspruch 9, **dadurch gekennzeichnet, dass** die potentiell elektrisch leitfähige Struktur (2) durch in mindestens zwei Schichtlagen angeordnete, sich zumindest teilweise kreuzende Fasern (3, 4) gebildet wird, die an Kreuzungspunkten (5) bei der Herstellung des Gegenstandskörper s(1) zufällig elektrisch leitende Verbindungen (10) eingehen.

11. Monolithischer Gegenstand nach Anspruch 9 oder 10, **dadurch gekennzeichnet, dass** die elektrisch leitfähige Struktur (2) Endpunkte (10,11,12,13) an allen Seitenflächen (8, 9) des Gegenstandskörpers (1) aufweist.

12. Monolithischer Gegenstand nach einem der Ansprüche 9 bis 11, **dadurch gekennzeichnet, dass** er in Form eines tragbaren Datenträgers ausgebildet ist.
